# EUROPEAN PATENT APPLICATION

(11) **EP 4 506 269 A1**
(43) Date of publication of application: **12.02.2025**
(21) Application number: 24185645.9
(22) Date of filing: 01.07.2024
(51) Int. Cl.: B65B 35/58, B65G 47/244, B65B 65/02, B65H 15/02

(54) **APPARATUS FOR ORIENTING A GROUP OF PRODUCTS**

(30) Priority: 07.08.2023 IT 202300016788
(71) Applicant: Bucci Automations S.p.A., 48018 Faenza (RA) (IT)
(72) Inventor: ACCORDI, Marco, 48018 Faenza RA (IT); GUIDI, Manuel, 47522 Cesena FC (IT)
(74) Representative: Modiano, Micaela Nadia

(57) **Abstract**

Apparatus (1) for orienting groups (G) of products (P) of the type comprising a fixed frame (2) supporting at least one holder (3) designed to arrange a group (G) of products (P).

Means (4) are interposed between the frame (2) and the holder (3) and are configured to rotate the holder (3) with respect to the frame (2) between a first configuration for the entry of the group (G) of products (P) and a second configuration, rotated, for the exit of the group (G) of products (P). The walls (5, 6, 7, 8) delimiting the holder (3) are smooth and continuous; a first wall (5), which constitutes the base of the holder (3) in the first configuration, is associated with means (9) configured for its translation away from the additional walls (6, 7, 8) of the holder (3) during the rotation between the first and the second configuration: the space present between the first wall (5) and the remaining walls (6, 7, 8) of the holder (3) in the second configuration is adapted for the entry of at least one element (A) for extracting the group (G) from the holder (3).

## Description

The present invention relates to an apparatus for orienting groups of products, particularly adapted for orienting groups of products that are easily deformable (such as, for example, tampons, diapers and the like).

In fact, the packaging of this type of products entails their grouping (placing them side by side or superimposing them) in order to insert them into a pouch or into a carton.

Often manufacturers prefer that the products, inside the respective pouch or carton, are oriented so as to present a specific edge when the pouch or carton is opened by the user. The choice is determined by the fact that some edges of the single product may be easier to grasp and/or aesthetically more uniform (and therefore more pleasing).

For this reason the use is known of stations designed to modify the orientation of groups of products, within packaging machines, so ensuring that these therefore reach the stage of insertion into a pouch or carton correctly oriented (in accordance with the manufacturer's requirements).

The problem that arises in conventional stations is linked to the need for the walls of the station that the products in the group abut against to have openings, through which pushers and other elements can move in order to move and/or immobilize the products in the group.

Depending on the type of orientation to be obtained with conventional stations, these openings can be on the base of the station on which the products slide as they enter the station (which, after the rotation, becomes a side wall for containing the products) or they can be on the base of the station on which the products slide as they exit from the station (which, before the rotation, constitutes a side wall for containing them).

The products, sliding over these openings (either during the entry or the exit or both) can be subjected to damage, because their edge can catch on the rims of the openings, forming wrinkles or even abrading.

The use is known of openings with dimensions as small as possible while still allowing the passage of any pushers and/or manipulators, and of rounding the rims of the openings in order to seek to minimize the damage caused to products by them, but in any case, in conventional stations it is not possible to completely guard against this problem.

The aim of the present invention is to solve the above-mentioned drawbacks, by providing an apparatus for orienting groups of products that orients the group of products without damaging them in any way.

Within this aim, an object of the invention is to provide an apparatus for orienting groups of products that orients the group of products without generating wrinkles on them.

Another object of the invention is to provide an apparatus for orienting groups of products that orients the group of products without generating abrasions and/or breaks on them.

Another object of the invention is to provide an apparatus for orienting groups of products that enables an easy insertion of the group of products in it.

Another object of the invention is to provide an apparatus for orienting groups of products that enables an easy extraction of the group of products from it.

Another object of the present invention is to provide an apparatus for orienting groups of products which is of low cost, easily and practically implemented, and safe in use.

This aim and these and other objects that will become more apparent hereinafter are achieved by an apparatus for orienting groups of products of the type comprising a fixed frame supporting at least one holder designed to arrange a group of products, characterized in that means are interposed between said frame and said holder which are configured to rotate said holder with respect to said frame between a first configuration for the entry of said group of products and a second configuration, rotated, for the exit of said group of products, the walls delimiting said holder being smooth and continuous, a first wall which constitutes the base of said holder in said first configuration being associated with means configured for its translation away from the additional walls of said holder during the rotation between said first and said second configurations, a space present between said first wall and the remaining walls of said holder in said second configuration being adapted for the entry of at least one element for extracting the group from said holder.

Further characteristics and advantages of the invention will become better apparent from the detailed description that follows of a preferred, but not exclusive, embodiment of the apparatus for orienting groups of products, which is illustrated by way of non-limiting example in the accompanying drawings wherein:
Figure 1 is a schematic perspective view of an embodiment of an apparatus for orienting groups of products according to the invention in a first configuration;
Figure 2 is a schematic perspective view of the apparatus of Figure 1 in the first configuration from a different observation point;
Figure 3 is a schematic perspective view of the apparatus of Figure 1 in a second configuration from the same observation point;
Figure 4 is a schematic perspective view of the apparatus of Figure 1 in a second configuration from the observation point of Figure 2;
Figure 5 is a schematic perspective view of the apparatus of Figure 1 before the entry of the group of products into its holder;
Figure 6 is a schematic perspective view of the apparatus of Figure 1 arranging a group of products in its holder in the first configuration;

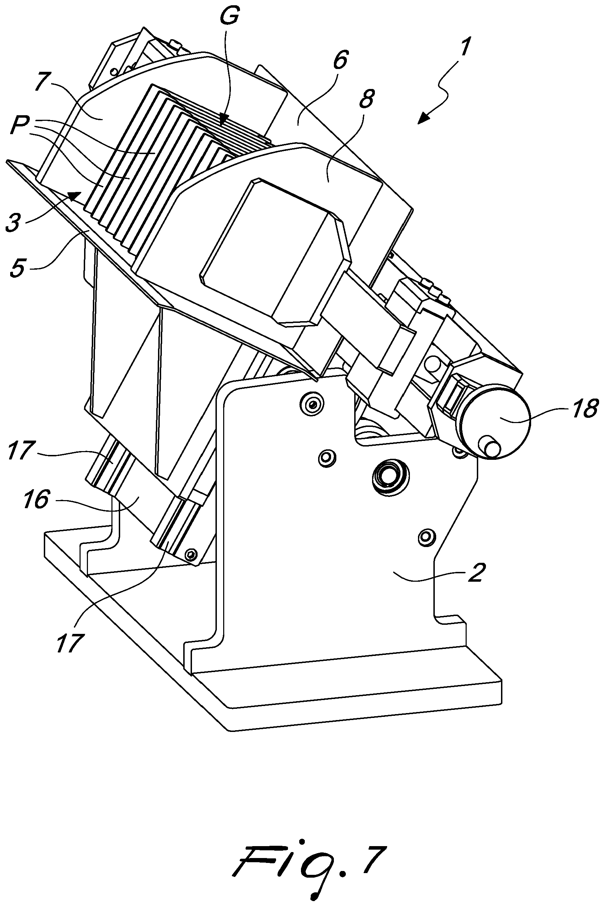

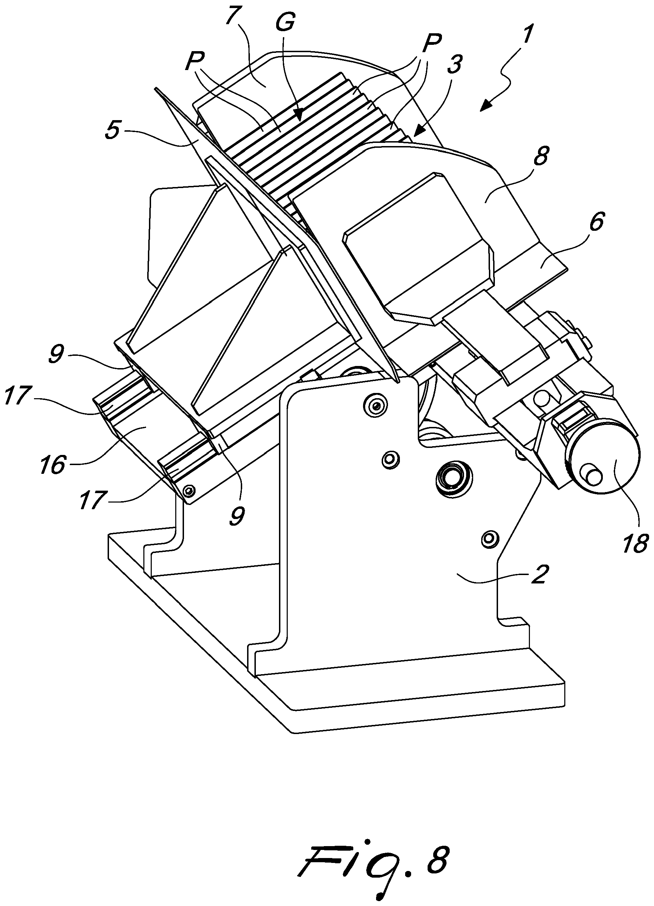

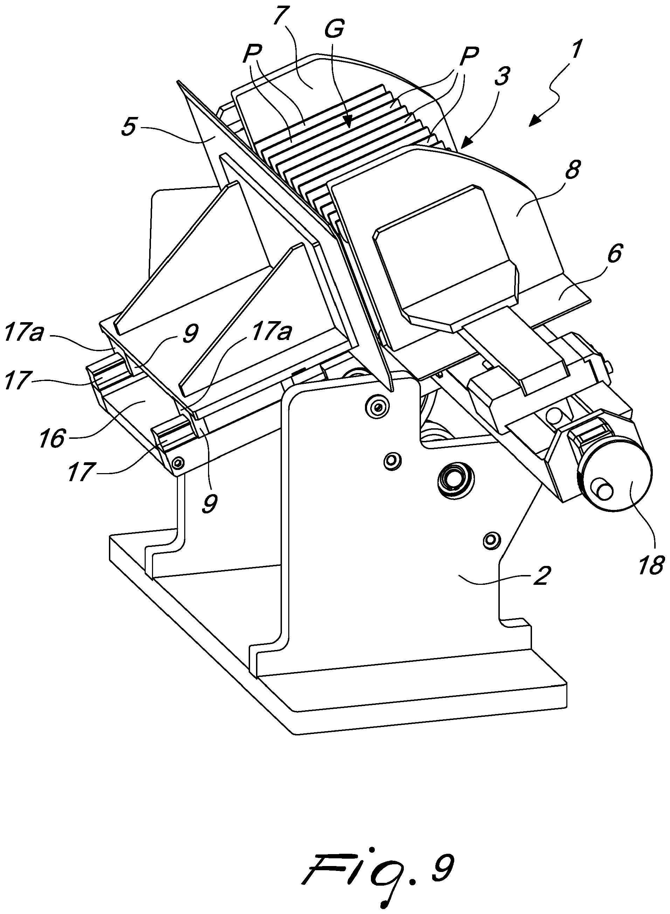

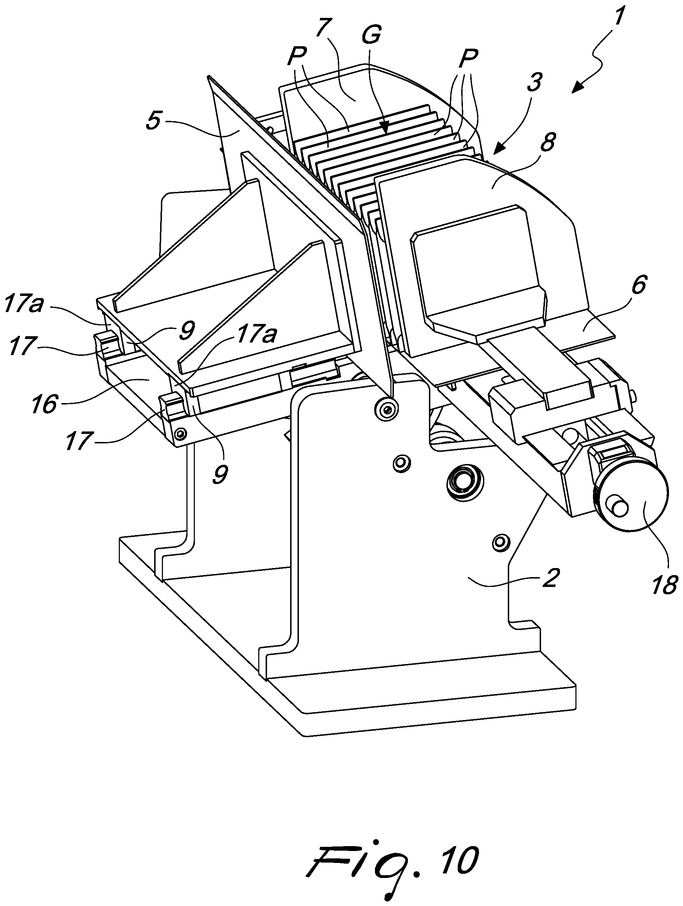

Figures 7-8-9-10 are schematic perspective views of the apparatus of Figure 1 during the rotation of the group of products arranged in its holder;
Figure 11 is a schematic perspective view of the apparatus of Figure 1 arranging a group of products in its holder in the second configuration;
Figure 12 is a schematic perspective view of the apparatus of Figure 1 at the end of the extraction of a group of products from its holder in the second configuration;

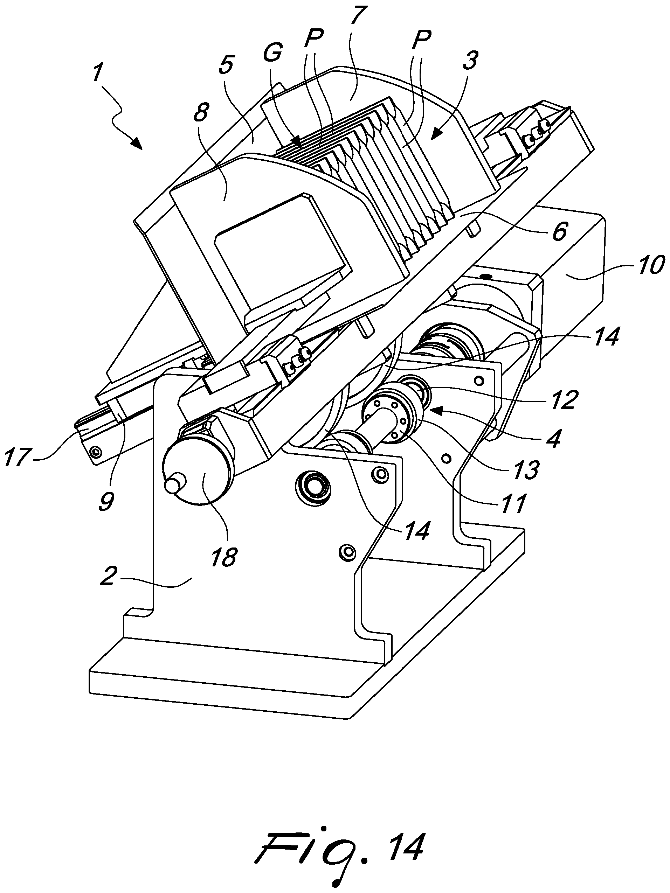

Figures 13-14-15-16 are schematic perspective views of the apparatus of Figure 1 during the introduction, rotation and extraction of a group of products from another observation point;

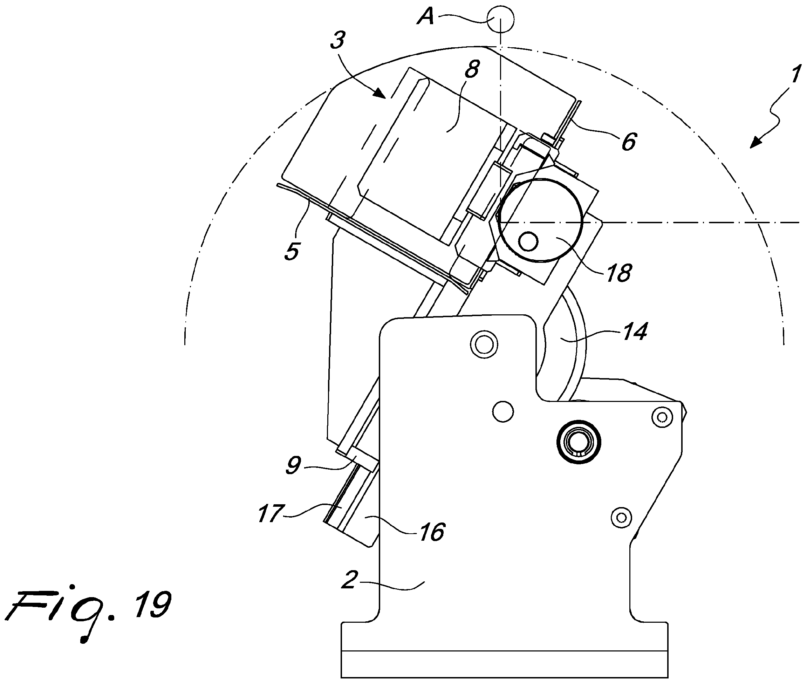

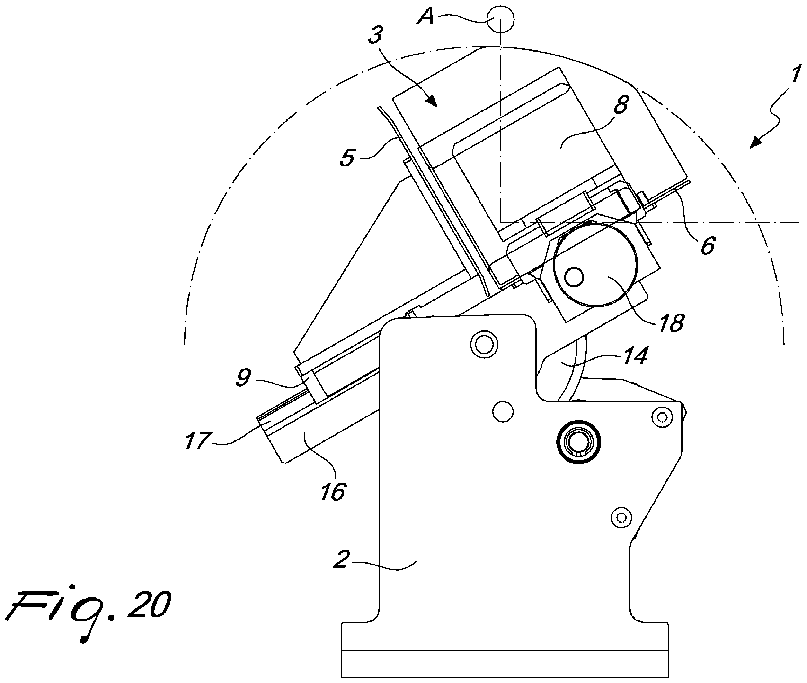

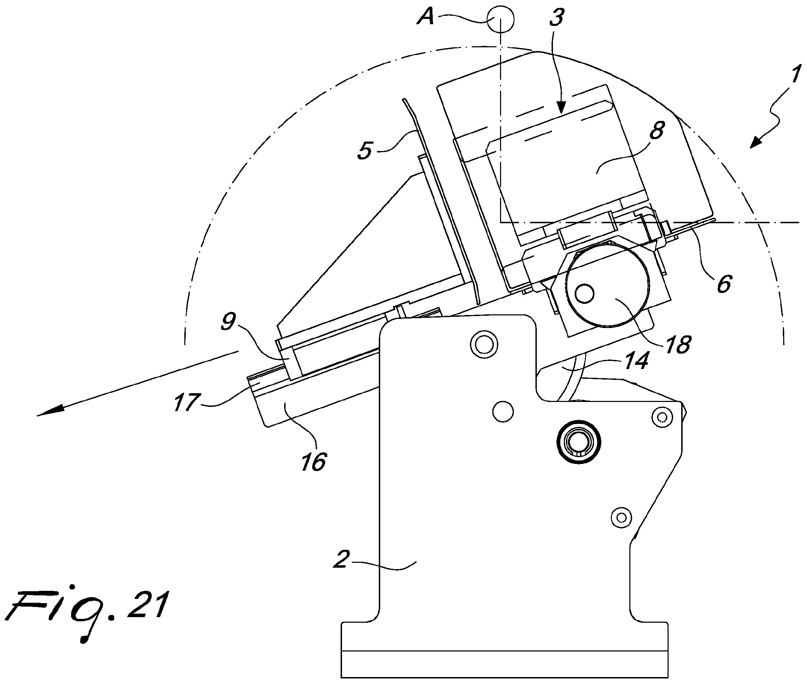

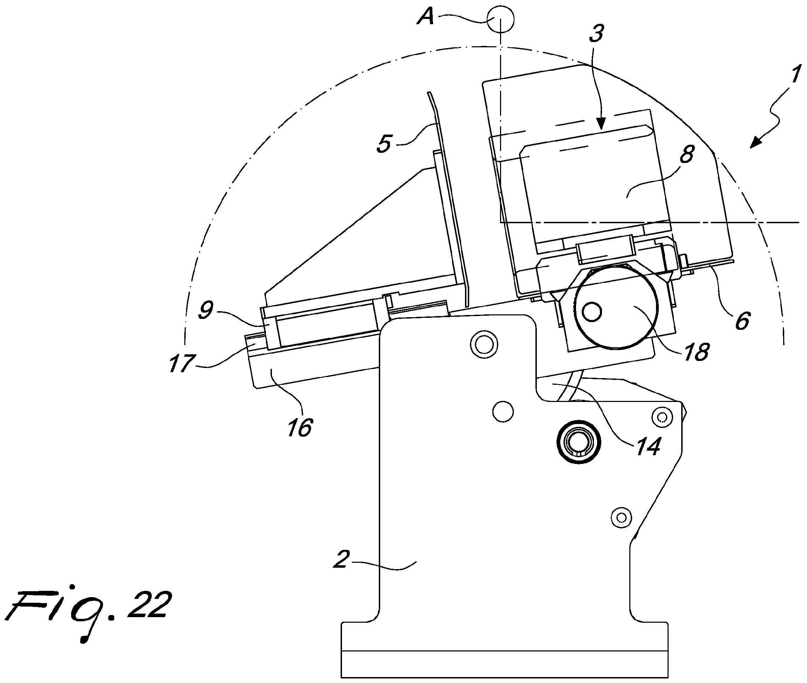

Figures 17-18-19-20-21-22-23-24 are schematic side views of the apparatus of Figure 1 during the introduction, rotation and extraction of a group of products from another observation point;
Figures 25-26 are schematic perspective views of a first additional version of the apparatus according to the invention arranged in the first configuration, from two different observation points;
Figures 27-28 are schematic perspective views of a second additional version of the apparatus according to the invention arranged in the first configuration, from two different observation points;
Figures 29-30 are schematic perspective views of a third additional version of the apparatus according to the invention arranged in the first configuration, from two different observation points.

With reference to the figures, the reference numeral 1 generally designates an apparatus for orienting groups G of products P.

The apparatus 1 according to the invention comprises a fixed frame 2 supporting at least one holder 3 designed to accommodate a group G of products P.

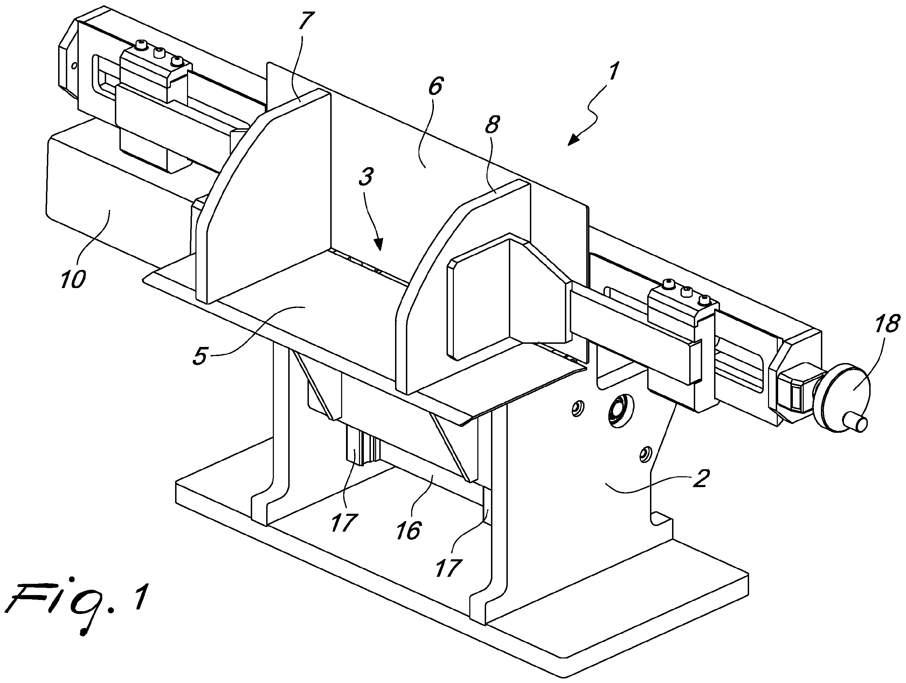

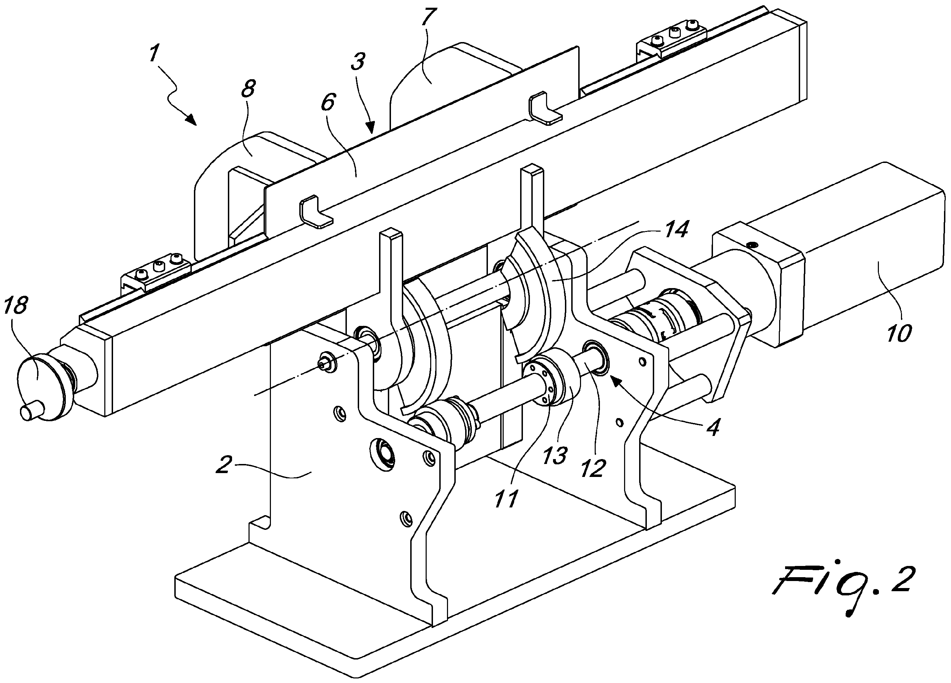

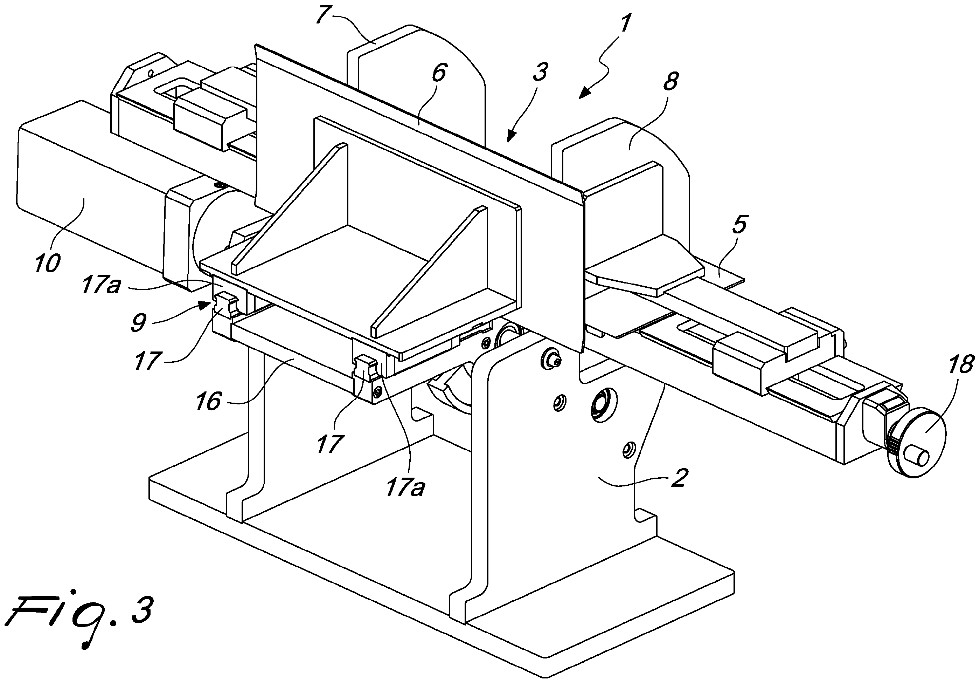

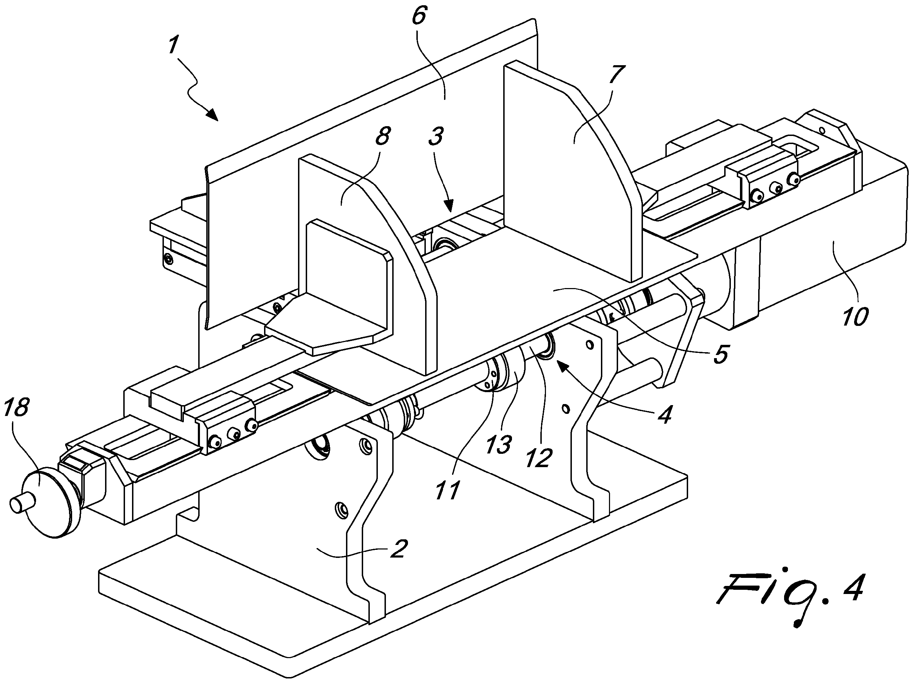

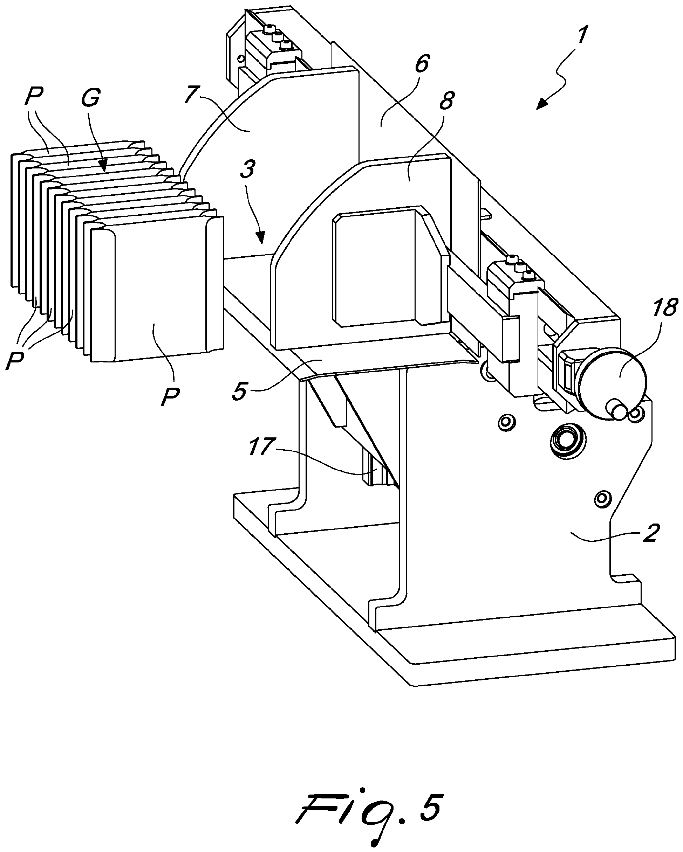

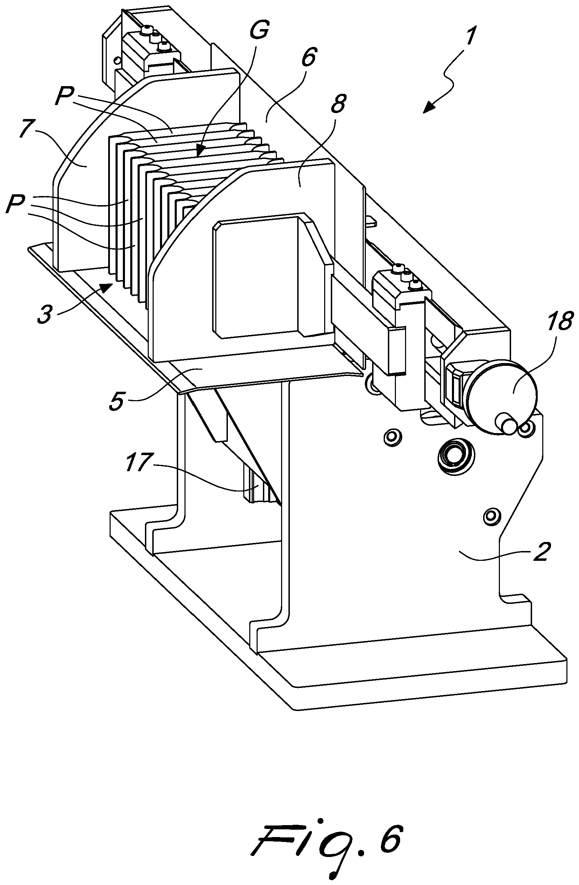

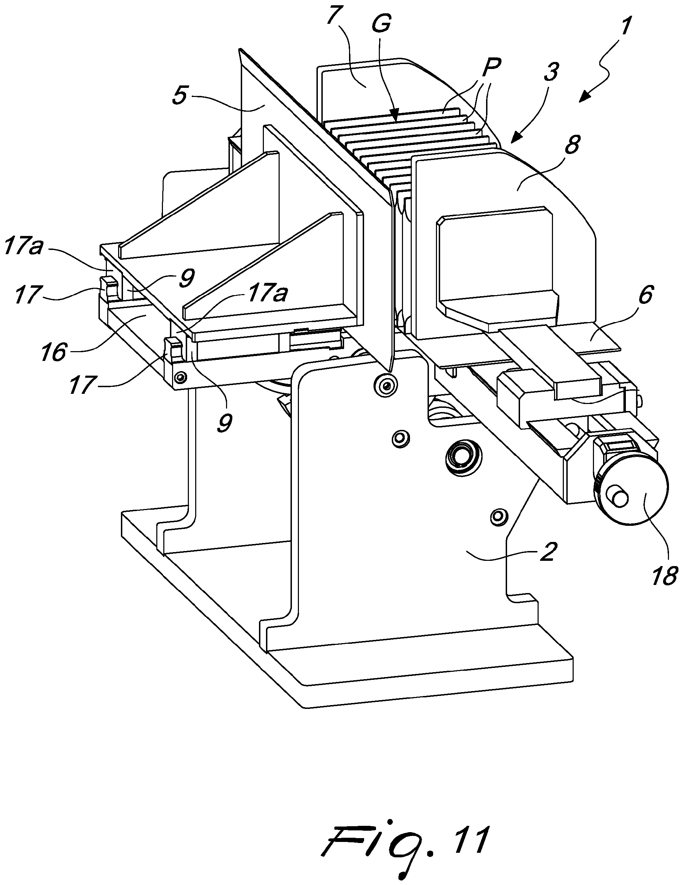

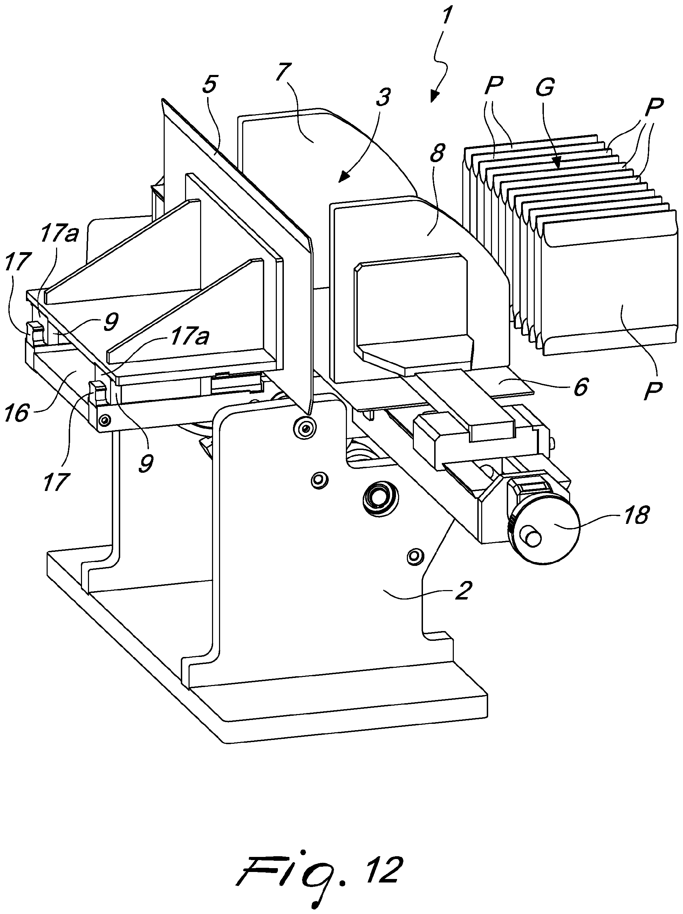

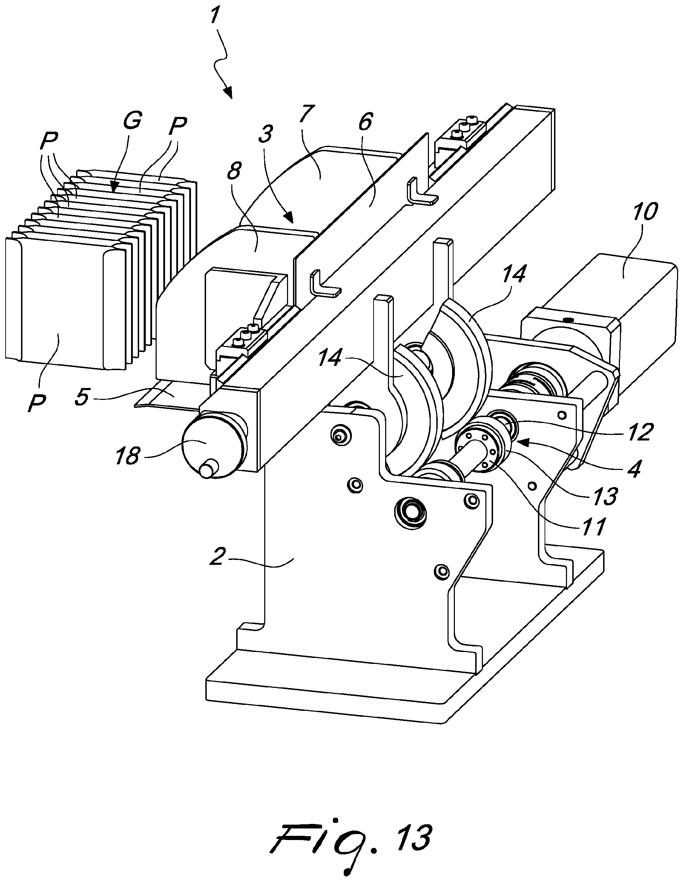

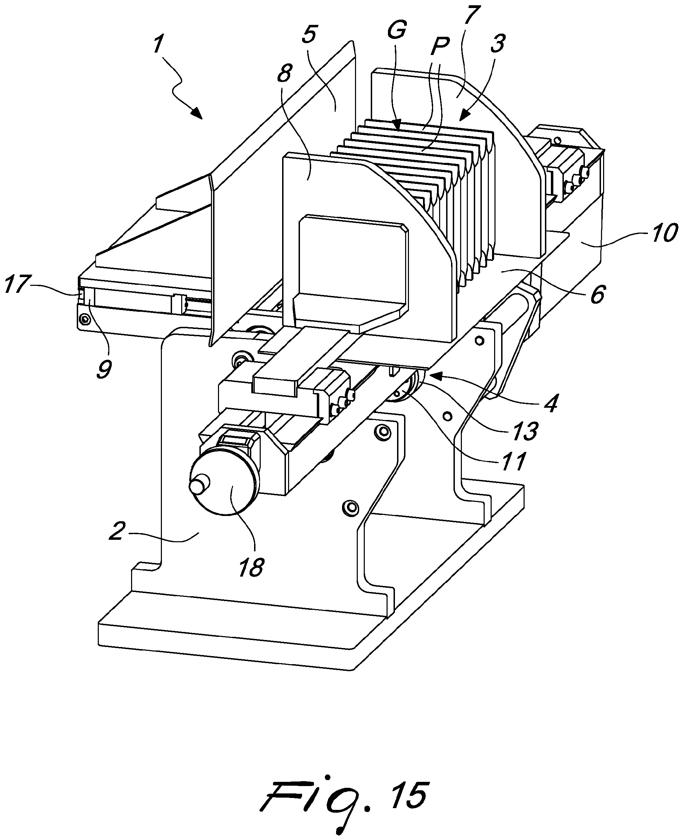

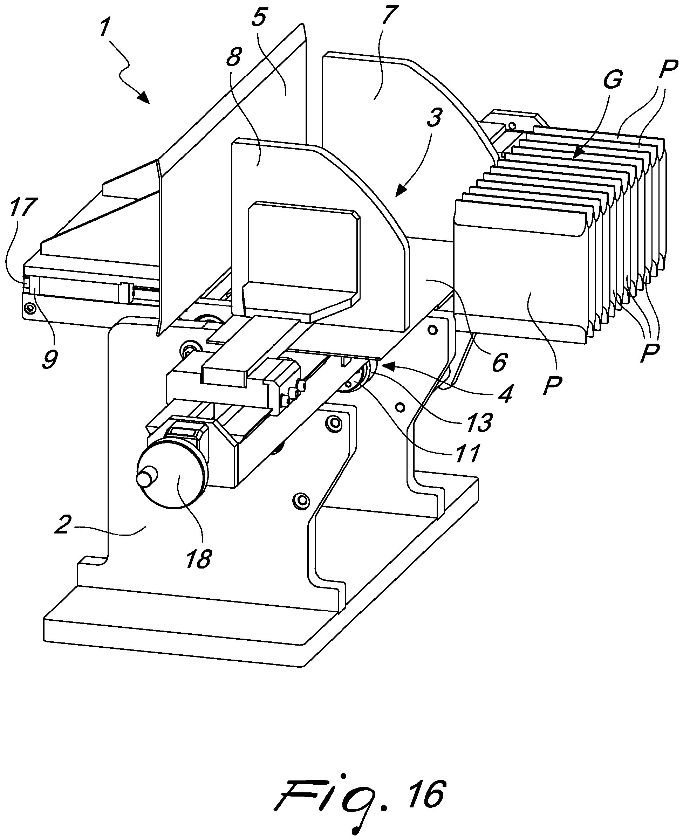

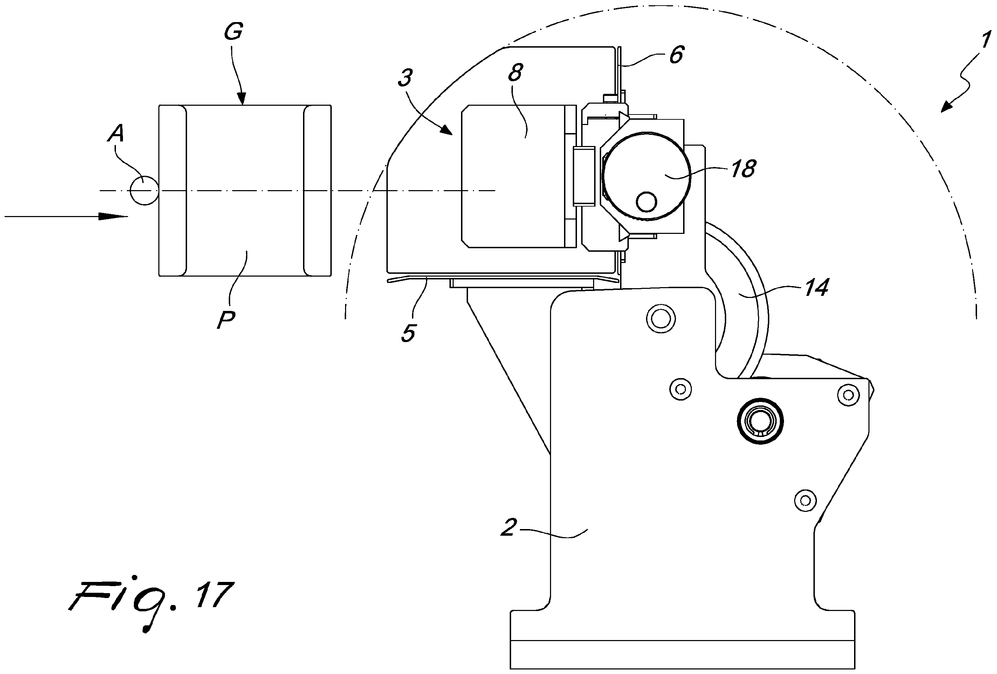

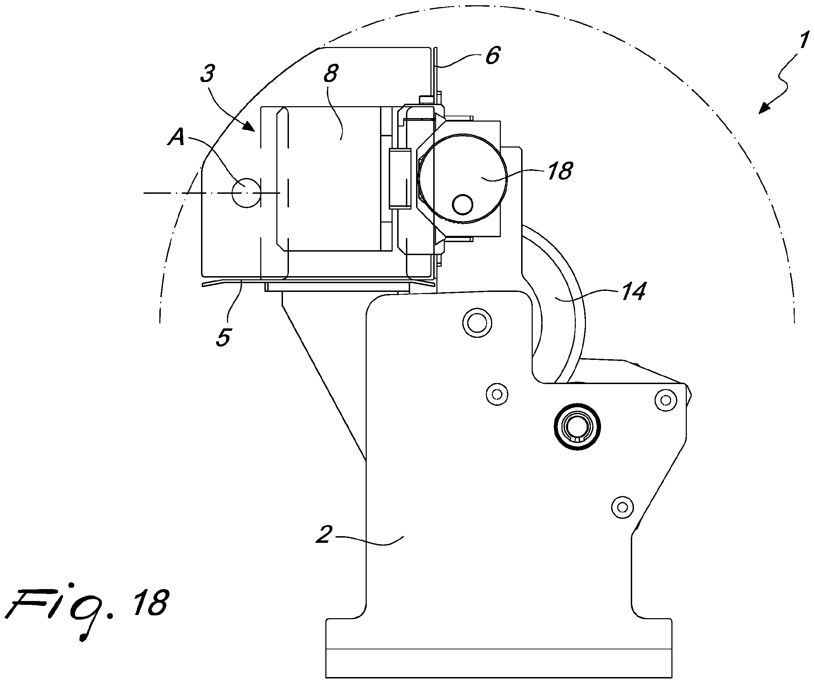

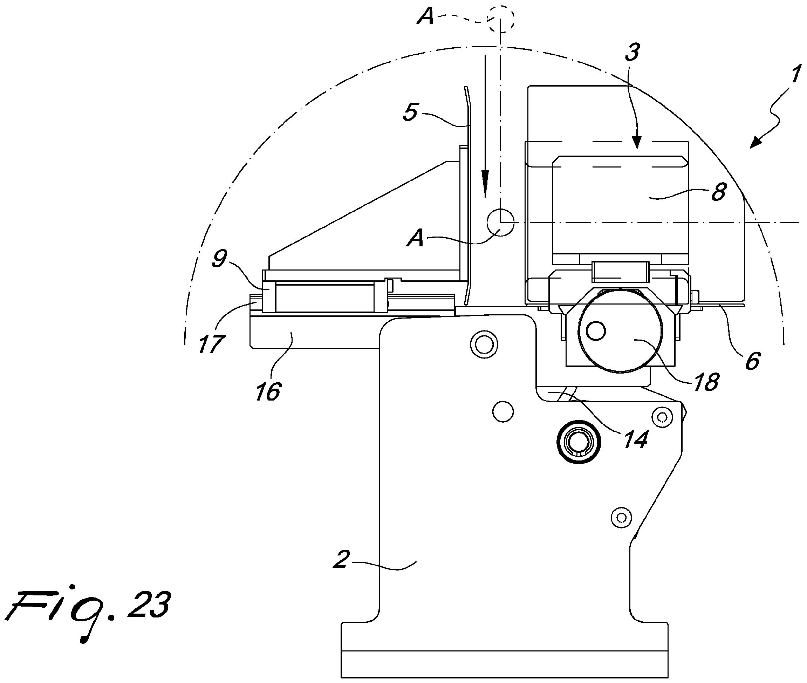

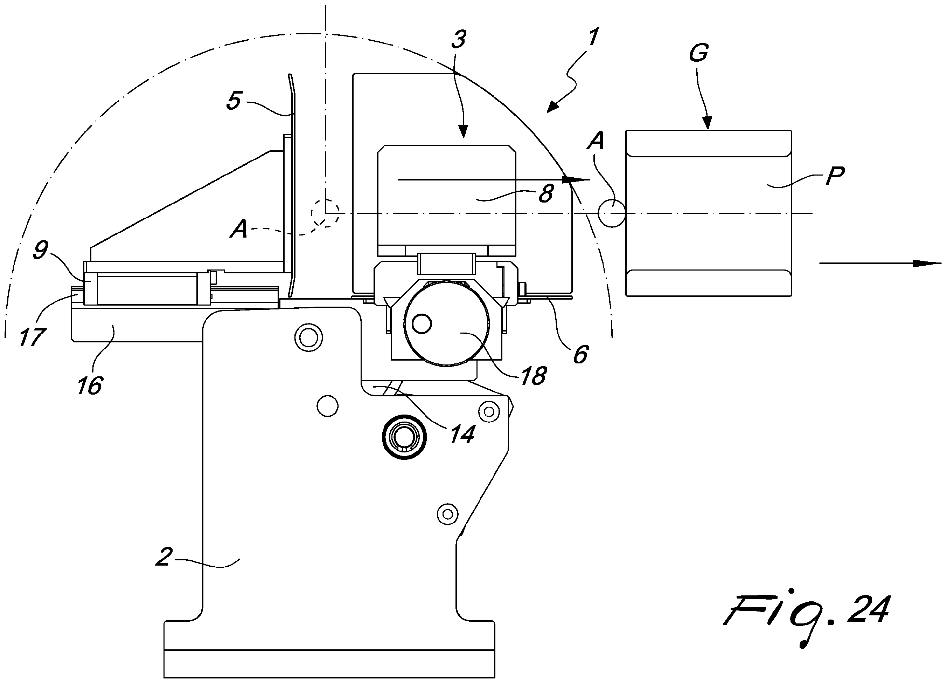

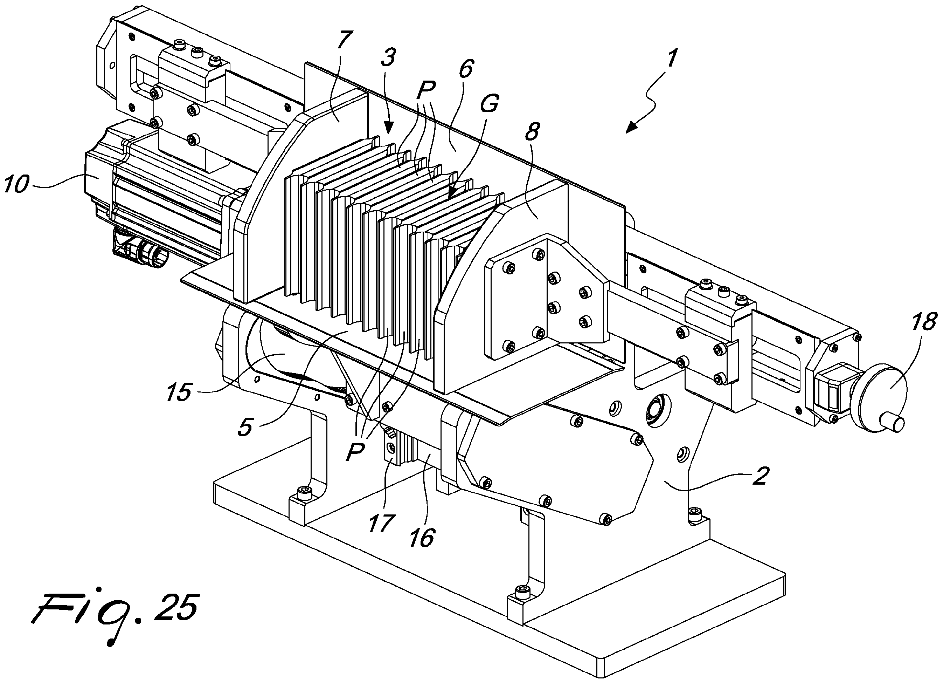

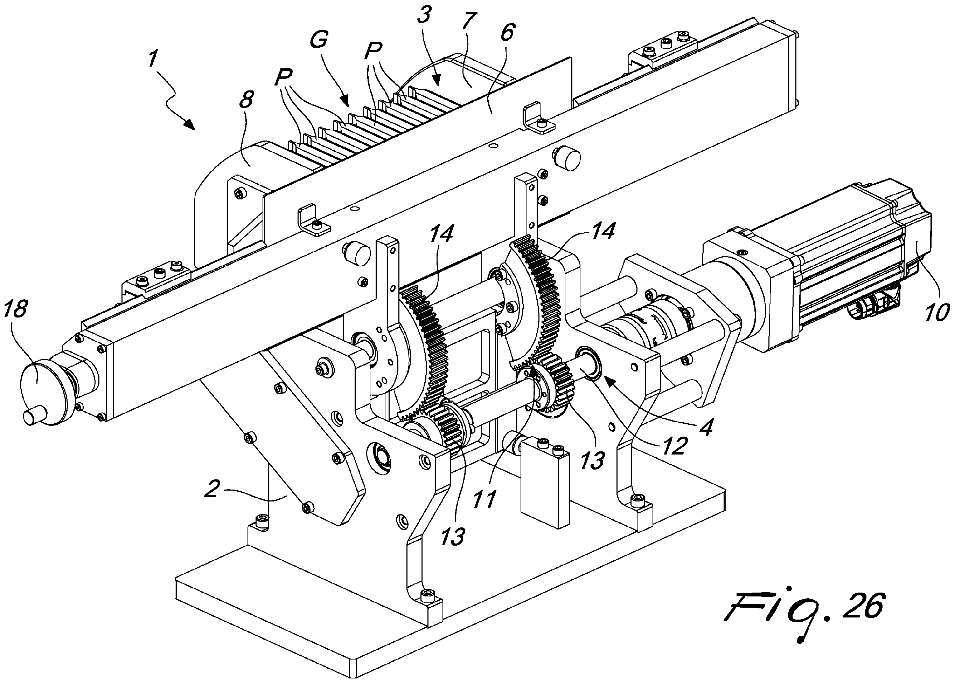

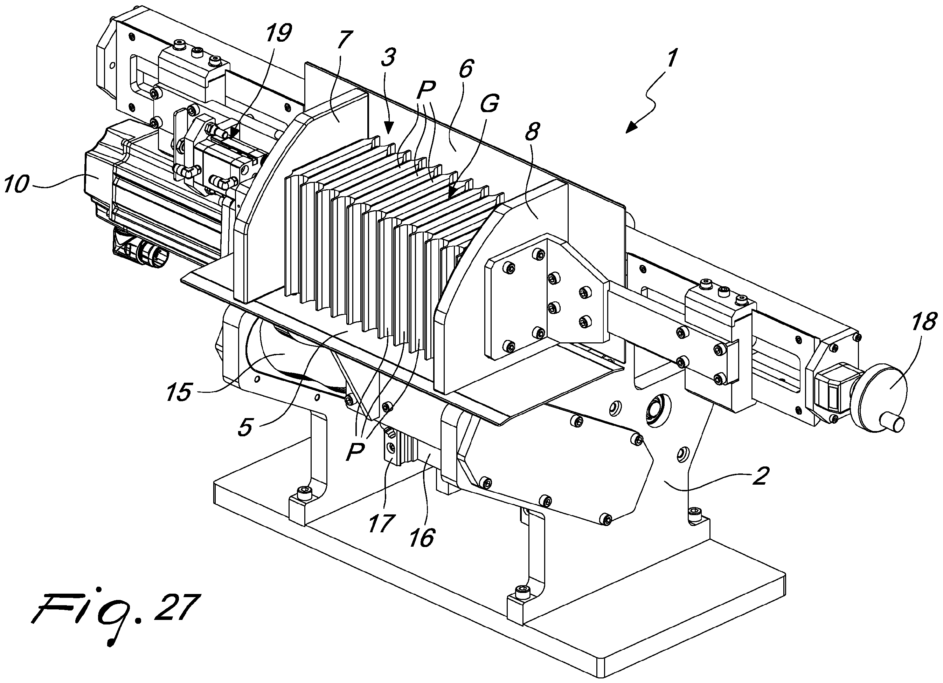

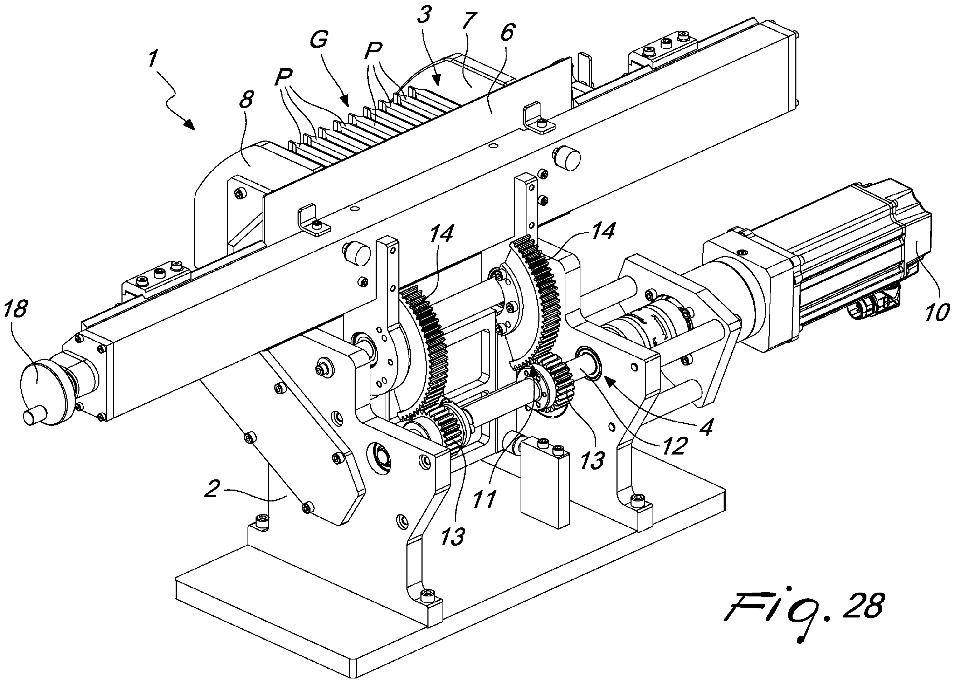

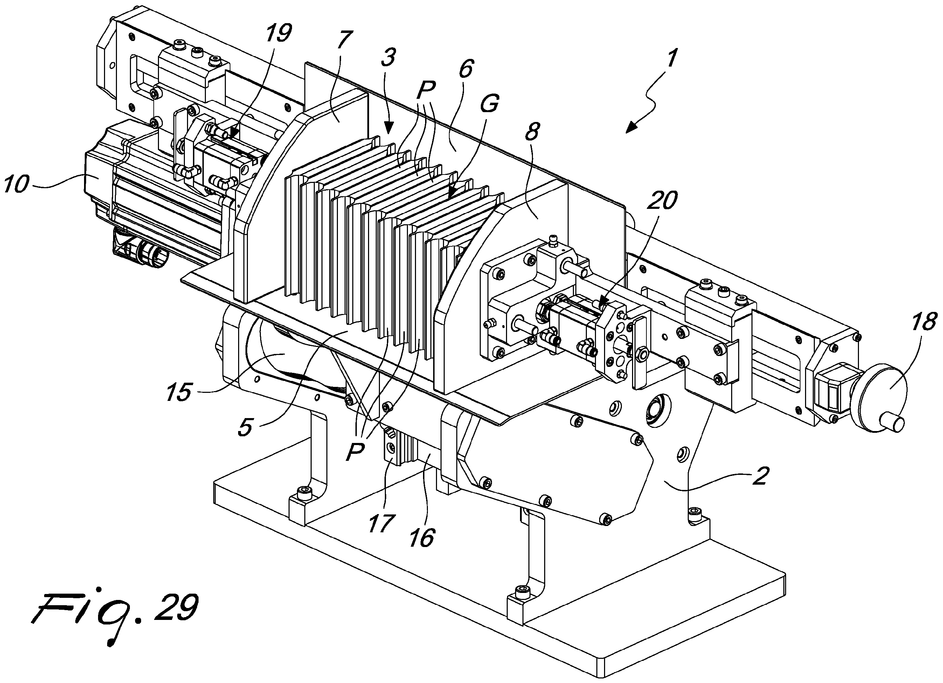

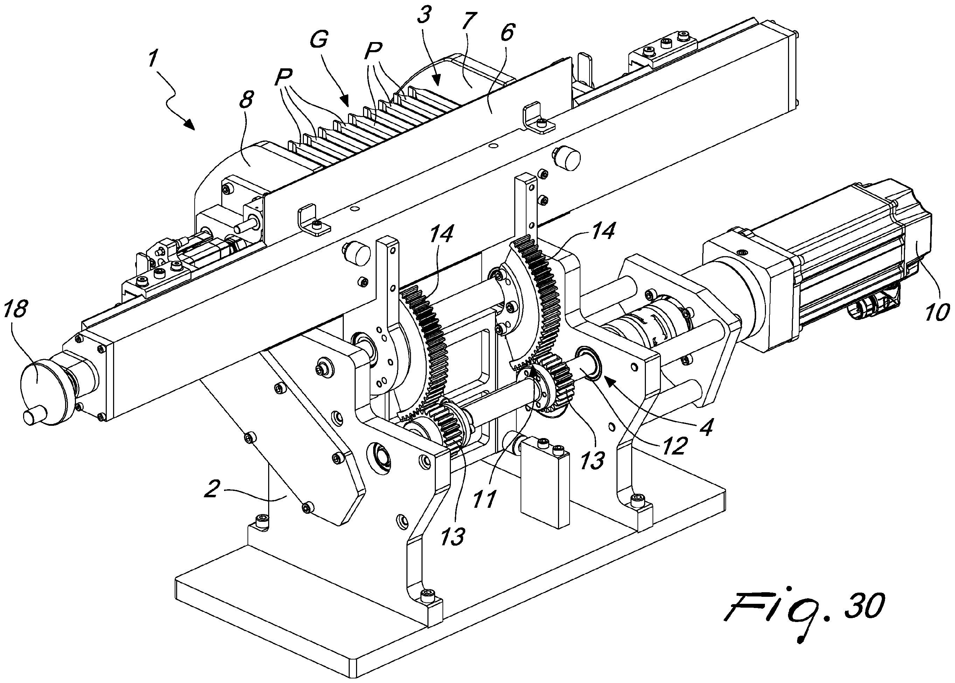

Means 4 are interposed between the frame 2 and the holder 3 and are configured to rotate the holder 3 with respect to the frame 2 between a first configuration for the entry of the group G of products P (shown by way of non-limiting example in the accompanying Figures 1, 2, 5, 6, 13, 17, 18, 25, 26, 27, 28, 29 and 30) and a second configuration, rotated, for the exit of the group G of products P (shown by way of non-limiting example in the accompanying Figures 3, 4, 11, 12, 15, 16, 23 and 24).

The holder 3 (and the group G of products P accommodated in it) undergoes a rotation which profitably occurs about an axis that is perpendicular to the direction of the advancement motion of the group G in the production line in which the apparatus 1 according to the invention is installed.

The walls 5, 6, 7 and 8 that delimit the holder are smooth and continuous: the absence of roughness, notches, slots, or holes on their surface ensures that the products P, while they slide on them, will not encounter obstacles and therefore will not be subject to sticking that could form wrinkles, abrasions and damage to the products P.

A first wall 5, which constitutes the base of the holder 3 when this is in the first configuration, is advantageously associated with means 9 configured for its translation away from the additional walls 6, 7 and 8 of the holder 3 during the rotation between the first and the second configuration.

A space present between the first wall 5 and the remaining walls 6, 7 and 8 of the holder 3 in the second configuration is adapted for the entry of at least one element A for extracting the group G from the holder 3.

It should be noted that the extractor element A can be part of the apparatus 1 but it can also be completely independent of it (for example installed on one of the components of the production line in which the apparatus 1 is installed, so as to be able to operate separately, although conveniently coordinated by the at least one computer dedicated to the control and running of the production line).

By virtue of the means 9, configured to move the wall 5 away from the other walls 6, 7 and 8 during the transition from the first to the second configuration (such means 9 subsequently will also move the wall 5 back toward other walls 6, 7 and 8 during the retrograde rotation stroke from the second to the first configuration), it will be possible to define a space within which the extractor element A can enter the holder 3 so as to be able to abut against an edge of the products P of the group G, so extracting them from the holder.

Thus it has been seen that it is possible to prevent the walls 5, 6, 7 and 8 from comprising notches or holes or slots in order to allow the passage of a respective extraction component, as occurs in all the conventional stations designed for the rotation of groups G of products P.

By virtue of the presence of the means 9 it is therefore possible to adopt walls 5, 6, 7 and 8 that are smooth and continuous (free from roughness) which ensure that the products P, while sliding on them, cannot undergo any kind of damage, whether aesthetic (such as for example the formation of wrinkles) or structural (such as abrasions and/or rips).

The means 4 interposed between the frame 2 and the holder 3 comprise a motor 10 integral with the frame 2 and respective transmission elements 11, interposed between the shaft 12 of the motor 10 and the holder 3. Such means 4 enable the rotation of the holder 3 with respect to the frame 2 through an angle of 90°, along an alternating angular stroke between a first configuration for the entry of the group G of products P into the holder 3 and a second configuration, rotated through 90° (with respect to the first configuration), for the exit of the group G of products P from the holder 3 and vice versa.

The transmission elements 11 comprise a pinion 13 which is integral with the shaft 12 of the motor 10 and a toothed body 14 which is integral with the holder 3: the toothed body 14 meshes with the pinion 13.

With reference to an embodiment of undoubted practical and applicative interest, elements 15 can conveniently be interposed between the first wall 5 and the frame, which are configured for the translation of the first wall 5, from a first arrangement in which it is contiguous to the other walls 6, 7 and 8 (shown by way of non-limiting example in the accompanying Figures 1, 2, 5, 6, 13, 17, 18, 25, 26, 27, 28, 29 and 30), to a second arrangement in which it is separated from them (the arrangement in which it is at the maximum distance from them is shown by way of non-limiting example in the accompanying Figures 3, 4, 11, 12, 15, 16, 23 and 24), during the rotation of the holder 3 between the first and the second configuration.

The elements 15, configured for the translation of the first wall 5, comprise a cam which is integral with the frame 2 and a slider which is integral with the first wall 5 and constrained to slide within the cam.

At least one track 17 is interposed between the first wall 5 and a respective guiding support 16, and is integral with the support 16, and a sliding block 17a, integral with the first wall 5, can slide on it: each track 17 is parallel to the direction of translation of the first wall 5 (so ensuring that the wall moves while remaining parallel to itself).

The holder 3 further comprises profitably a pair of facing, parallel and mutually opposite side walls 7 and 8: at least one of these side walls 7 and 8 is positively controlled by a respective actuator 18, 19, 20 for translation toward/away from the other side wall 8, 7.

The actuator 18 can usefully be functionally associated with both of the side walls 7, 8 for simultaneous and synchronous translation toward/away from each other.

This actuator 18, 19, 20 can conveniently be of the type chosen from a manually operated actuator 18 and power-assisted actuators 19, 20.

The manually-operated actuator 18 will generally always be present since it will allow very precise adjustments (and optionally adaptations of the distance between the walls 7 and 8 during the operation of the apparatus 1) at any time, based on the assessments of the operator; by way of non-limiting example it should be noted that such actuator 18 can comprise an actuation wheel (of the type traditionally used in automatic machines for controlling the position of components) associated with a leadscrew assembly (with mutually opposite threading for the synchronous and mirror-symmetrical of the two walls 7 and 8) or with a rack-and-pinion assembly or other conventional technical solutions.

The power-assisted actuator 19, 20 can also be configured for the compression of the group G of products P arranged in the holder 3 by moving the side walls 7, 8 toward each other.

This power-assisted actuator 19, 20 can comprise a respective controlled motor or it can be of the pneumatic type, associated with a respective pneumatic circuit controlled by a control and management unit (this latter option is particularly advantageous if the actuators 19, 20 are also adapted for the compression of the group G, as the pneumatic actuator ensures that excessive pressures cannot be applied to the group G). The embodiment that makes use, instead, of controlled motors makes it possible to obtain a compression effect that is more controllable and therefore more precise, including in terms of possible successive adjustments.

The presence of the power-assisted actuator 19, 20 aims to determine an effect chosen between the retention of the group G (so that during the rotation of the group G it will remain in conditions of ideal alignment of the products P that go to make it up) and/or the reduction of the transverse footprint of that group G (so that it can be subsequently processed according to specific implementation requirements).

Advantageously the present invention solves the above-mentioned problems, by providing an apparatus 1 for orienting groups G of products P that is capable of orienting the group G of products P without damaging them in any way: this is achieved by virtue of the capacity of the first wall 5 to be moved away from the other walls 6, 7 and 8 during the rotation so as to leave a space (when the holder 3 assumes the second configuration, for the extraction of the group G from the holder 3) that is suitable for the entry of the at least one extractor element A. Since the extractor element A does not need to pass through any wall 5, 6, 7 and 8 (as happens in the prior art), these walls can be continuous, smooth and free from roughness (so ensuring that the products P can slide on them without the risk of sticking, jamming, abrasions and rips, as happens in the prior art).

Conveniently the apparatus 1 according to the invention orients the group G of products P without generating wrinkles on them.

Advantageously the apparatus 1 according to the invention orients the group G of products P without generating abrasions and/or breaks on them.

Profitably the apparatus 1 according to the invention allows an easy insertion of the group G of products P into it.

Positively the apparatus 1 according to the invention allows an easy extraction of the group G of products P from it.

Conveniently the apparatus 1 according to the invention allows the compression of the group G of products P inside it during its rotation (or in any case when the group G is inside the holder 3), thus making it possible to proceed directly to insertion into a pouch and/or a carton of the group G immediately downstream of the apparatus 1.

Positively the apparatus 1 according to the invention is easily and practically implemented and is of low cost: such characteristics make the apparatus 1 according to the invention an innovation that is safe in use.

The invention thus conceived is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

The disclosures in Italian Patent Application No. 102023000016788 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for orienting groups (G) of products (P) of the type comprising a fixed frame (2) supporting at least one holder (3) designed to arrange a group (G) of products (P), **characterized in that** means (4) are interposed between said frame (2) and said holder (3) which are configured to rotate said holder (3) with respect to said frame (2) between a first configuration for the entry of said group (G) of products (P) and a second configuration, rotated, for the exit of said group (G) of products (P), the walls (5, 6, 7, 8) delimiting said holder (3) being smooth and continuous, a first wall (5) which constitutes the base of said holder (3) in said first configuration being associated with means (9) configured for its translation away from the additional walls (6, 7, 8) of said holder (3) during the rotation between said first and said second configurations, a space present between said first wall (5) and the remaining walls (6, 7, 8) of said holder (3) in said second configuration being adapted for the entry of at least one element (A) for extracting the group (G) from said holder (3).

2. The apparatus according to claim 1, **characterized in that** said means (4) interposed between said frame (2) and said holder (3) comprise a motor (10) which is integral with said frame (2) and respective transmission elements (11), interposed between the shaft (12) of said motor (10) and said holder (3), for the rotation of said holder (3) with respect to said frame (2) through an angle of 90° along an alternating angular stroke between a first configuration for the entry of said group (G) of products (P) into said holder (3) and a second configuration, rotated through 90°, for the exit of said group (G) of products (P) from said holder (3), and vice versa.

3. The apparatus according to claim 2, **characterized in that** said transmission elements (11) comprise a pinion (13) which is integral with the shaft (12) of said motor (10) and a toothed body (14) which is integral with said holder (3) and which meshes with said pinion (13).

4. The apparatus according to one or more of the preceding claims, **characterized in that** said means (9) comprise elements (15) configured for the translation of said first wall (5), which are interposed between said first wall (5) and said frame (2), said translation occurring between a first arrangement, in which said first wall (5) is contiguous to the other walls (6, 7, 8), to a second arrangement, in which it is separated from them, during the rotation of said holder (3) between said first and said second configuration.

5. The apparatus according to claim 4, **characterized in that** said elements (15) configured for the translation comprise a cam which is integral with said frame (2) and a slider which is integral with said wall (5), said slider being constrained to slide within said cam.

6. The apparatus according to one or more of the preceding claims, **characterized in that** at least one track (17) is interposed between said first wall (5) and a respective guiding support (16) and is integral with said support (16), a sliding block (17a) sliding thereon and being integral with said first wall (5), said track (17) being parallel to the direction of translation of said first wall (5).

7. The apparatus according to one or more of the preceding claims, **characterized in that** said holder (3) comprises a pair of facing, parallel and mutually opposite side walls (7, 8), at least one of said side walls (7, 8) being controlled by a respective actuator (18, 19, 20) for translation toward/away from the other side wall (8, 7).

8. The apparatus according to the preceding claim, **characterized in that** said actuator (18) is functionally associated with both of said side walls (7, 8) for simultaneous and synchronous translation toward/away from each other.

9. The apparatus according to one or more of claims 7 and 8, **characterized in that** said actuator (18, 19, 20) is of a type selected from a manually-operated actuator (18) and power-assisted actuators (19, 20).

10. The apparatus according to claim 9, **characterized in that** said actuator is power-assisted (19, 20) and is configured to compress said group (G) of products (P) accommodated in said holder (3) by means of the mutual approach of said side walls (7, 8) in order to produce an effect chosen between the retention of said group (G) and/or the reduction of the transverse footprint of said group (G).
